# EUROPÄISCHE PATENTSCHRIFT

(11) **EP 3 260 277 B1**
(45) Veröffentlichungstag und Bekanntmachung des Hinweises auf die Patenterteilung: **01.01.2020**
(21) Anmeldenummer: 17176880.7
(22) Anmeldetag: 20.06.2017
(51) Int. Cl.: B29C 65/18, B29C 65/30, B29C 65/48, B29L 23/00

(54) **VERFAHREN UND VORRICHTUNG ZUM THERMISCHEN FÜGEN EINER SCHICHT AUS EINEM KUNSTSTOFFMATERIAL AUF EINEM KUNSTSTOFFROHR**
METHOD AND DEVICE FOR THE THERMAL JOINING OF A LAYER MADE OF A PLASTIC MATERIAL ONTO A PLASTIC PIPE
PROCÉDÉ ET DISPOSITIF D'ASSEMBLAGE THERMIQUE D'UNE COUCHE EN MATIÈRE PLASTIQUE SUR UN TUBE EN MATIÈRE PLASTIQUE

(30) Priorität: 21.06.2016 DE 102016111305
(43) Veröffentlichungstag der Anmeldung: 27.12.2017
(73) Patentinhaber: Hutchinson Aerospace GmbH, 21129 Hamburg (DE)
(72) Erfinder: Hörstel, Alexander, 21217 Seevetal (DE); Weng, Alexander, 20359 Hamburg (DE); Jenk, Bastian, 27299 Langwedel (DE); Arnold, Mario, 72793 Pfullingen (DE)
(74) Vertreter: Bittner, Thomas L.

(56) Entgegenhaltungen:
- DE-A1- 3 233 983
- DE-U1- 9 211 014

## Beschreibung

Die Erfindung betrifft ein Verfahren und eine Vorrichtung zum thermischen Fügen einer Schicht aus einem Kunststoffmaterial auf einem Kunststoffrohr.

### Hintergrund

Kunststoffrohre kommen in verschiedenen technischen Anwendungen zum Einsatz. Das Kunststoffrohr kann hierbei aus einem oder mehreren Kunststoffmaterialien bestehen. Wahlweise sind in das Kunststoffmaterial Fasern eingebettet. In Abhängigkeit vom Einsatzzweck solcher Kunststoffrohre kann vorgesehen sein, auf ein Kunststoffrohr außen oder innen eine Verstärkung oder Aussteifung aufzubringen, indem ein Schichtmaterial aus Kunststoff auf das Kunststoffrohr aufgebracht wird, beispielsweise mittels Kleben. Auf diese Weise können zum Beispiel Endstücke von Kunststoffrohren verstärkt werden.

Das Dokument DE 103 60 471 A1 betrifft ein Kunststoffrohr mit zumindest einer Anschlussstelle zur Verbindung mit einem anderen Kunststoffrohr oder einem anderen Verbindungsstück, wobei die Anschlussstelle einen Dichtungsbereich aufweist betrifft ein Kunststoffrohr mit zumindest einer Anschlussstelle zur Verbindung mit einem anderen Kunststoffrohr oder einem anderen Verbindungsstück, wobei die Anschlussstelle einen Dichtungsbereich aufweist. Auf der Anschlussstelle im Dichtungsbereich ist eine Verstärkung aufgebracht, die ein Kriechen des Kunststoffes der Anschlussstelle im Dichtungsbereich weitestgehend oder vollständig verhindert. Des weiteren sind ein Verfahren und eine Vorrichtungen zur Herstellung eines derartigen Kunststoffrohres offenbart.

Das Dokument US 2011 / 0259509 A1 betrifft eine Maschine zum Beschichten einer Rohrverbindung mit einem Schichtmaterial aus synthetischem Harz.

Das Dokument DE 32 33 983 A1 betrifft ein Verfahren zum Ummanteln von Rohren aus Kunststoff mit einem Schutzmantel.

Das Dokument DE 92 11 014 U1 betrifft ein Thermomarkierungsgerät für Rohre, um mittels zweier mit elektrischen Hochleistungspatronen erwärmter Heizbacken auf Rohre eine dauerhafte Kennzeichnung in Form von farbigen beschrifteten Folien anzubringen.

### Zusammenfassung

Aufgabe der Erfindung der ist es, ein Verfahren und eine Vorrichtung zum thermischen Fügen einer Schicht aus einem Kunststoffmaterial auf ein Kunststoffrohr anzugeben, die auf einfache und effiziente Weise in industrielle Fertigungsprozesse für Kunststoffrohre integrierbar sind.

Zur Lösung sind ein Verfahren und eine Vorrichtung zum thermischen Fügen einer Schicht aus einem Kunststoffmaterial auf ein Kunststoffrohr nach den unabhängigen Ansprüchen 1 und 13 geschaffen. Ausgestaltungen sind Gegenstand von abhängigen Unteransprüchen.

Beim Anordnen der Heiz- und der Kühleinrichtung können am Kunststoffrohr Heizelemente und Kühlelemente ineinander kämmen. Die Heiz- und die Kühlelemente können abwechselnd einkämmen. Die Heiz- und / oder Kühlelemente können jeweils einen Halbkreis oder einen Viertelkreis des Umfangs des Kunststoffrohrs erfassend ausgebildet sein. Die Heiz- und / oder die Kühlelemente können jeweilige Kammelemente aufweisen.

Das thermische Fügen kann zum Beispiel unter Verwendung von Aufschweißen oder von Heißkleben ausgeführt werden.

Es kann vorgesehen sein, das Verfahren zum Herstellen eines Lüftungs- oder Klimarohrs zu verwenden, beispielsweise für das Herstellen eines Lüftungs- oder Klimarohrs für ein Fahrzeug oder ein Flugzeug.

Funktionselemente der Fügeeinrichtung können im Verlauf der Herstellung der Fügeverbindung an dem Kunststoffrohr mit dem hierauf angeordneten Schichtmaterial innen und / oder außen zur Auflage kommen. In einer Ausführungsform ist vorgesehen, dass die Fügeeinrichtung beim Fügeprozess ausschließlich von außen an dem Kunststoffrohr zur Anlage kommt.

Mittels thermischen Fügen, zum Beispiel Auf- oder Anschweißen und / oder Heißkleben, des Schichtmaterials, beispielsweise außen auf dem Kunststoffrohr, kann eine Rohrverstärkung hergestellt werden, zum Beispiel im Bereich eines Endstücks oder beider Endstücke des Kunststoffrohrs. Die Rohrverstärkung kann innen und / oder außen umlaufend durchgehend oder unterbrochen ausgebildet werden.

Das Schichtmaterial kann beim Herstellen der Fügeverbindung mittels der Heiz- und / oder der Kühleinrichtung gegen das Kunststoffrohr gedrückt werden. Die Druckbeaufschlagung, sei es innen und / oder außen am Kunststoffrohr, kann zum Teil oder ausschließlich mit Funktionselementen der Heiz- und / oder der Kühlreinrichtung erfolgen, beispielsweise Heizelementen der Heizeinrichtung und / oder Kühlelementen der Kühlreinrichtung. Es kann vorgesehen sein, dass beim Erhitzen des Kontaktbereichs beim Herstellen der Fügeverbindung die Druckbeaufschlagung ausschließlich oder überwiegend mit Funktionselementen der Heizeinrichtung ausgeführt wird. Alternativ kann vorgesehen sein, dass bei diesem Prozessabschnitt die Druckbeaufschlagung gemeinsam von Funktionselementen der Heizeinrichtung und Funktionselementen der Kühleinrichtung ausgeführt wird. Während des Kühlens der Fügeverbindung ist die Heizeinrichtung entfernt, weshalb nur noch Funktionselemente der Kühleinrichtung zur Druckbeaufschlagung beitragen können, wahlweise gemeinsam mit anderen Funktionselementen der Fügeeinrichtung.

Die Heiz- und / oder die Kühleinrichtung kann das Kunststoffrohr im Wesentlichen vollständig umgreifen, wenn die Heizeinrichtung / die Kühleinrichtung auf dem Kunststoffrohr angeordnet sind. Die Heiz- und / oder die Kühlreinrichtung können das Kunststoffrohr mit dem hierauf angeordneten Schichtmaterial formschlüssig umgreifen. Beispielsweise können zugeordnete Oberflächenabschnitte des Kunststoffrohrs formschlüssig in gegenüberliegenden Flächenabschnitten der Funktionselemente der Heizeinrichtung und / oder der Kühleinrichtung liegen. In einer auf das Kunststoffrohr mit dem Schichtmaterial aufgesetzten Stellung können Funktionselemente der Heizeinrichtung und / oder Funktionselemente der Kühleinrichtung miteinander verriegelt sein, insbesondere in der Druckstellung, in welcher die Druckbeaufschlagung erfolgt. Heizelemente und / oder Kühlelemente können jeweils untereinander oder in Kombination miteinander verriegeln. Es kann vorgesehen sein, dass die Funktionselemente zum Ausbilden der Verriegelung mit einem Verriegelungsbauteil zum Eingriff kommen. Beispielsweise kann ein sich in Längsrichtung des Kunststoffrohrs erstreckendes Verriegelungsbauteil vorgesehen sein, mit dem Funktionselemente der Heizeinrichtung und / oder Funktionselemente der Kühlreinrichtung zum Eingriff gebracht werden, wenn die Funktionselemente auf dem Kunststoffohr angeordnet werden.

Nach dem Entfernen der Heizeinrichtung kann beim Kühlen der Fügeverbindung mittels der Kühleinrichtung höchstens der beim Herstellen der Fügeverbindung beaufschlagte Druck aufrechterhalten werden. Es kann vorgesehen sein, dass mittels der Kühleinrichtung im Wesentlichen der gleiche Druck aufrechterhalten wird, wie er zuvor beim Erhitzen des Kontaktbereichs angewendet wurde. Alternativ ist der mittels der Kühleinrichtung noch aufrechterhaltene Druck geringer als der zuvor angewendete Druck. Die Druckbeaufschlagung kann ausschließlich mittels der Kühleinrichtung erfolgen, alternativ gemeinsam mit anderen Funktionselementen der Fügeeinrichtung.

Beim Kühlen der Fügeverbindung kann ein Kühlfluid über Fluidkanäle der Kühleinrichtung zur Fügeverbindung hin zugeführt werden. Die Fluidkanäle können zwischen Kühlelementen der Kühleinrichtung und / oder abschnittsweise innerhalb der Kühlelemente verlaufen. Die Heizelemente können zur Anlagefläche am Kunststoffrohr hin Fluidöffnung aufweisen, durch welche hindurch das Kühlfluid zum Kühlen ausströmt, beispielweise Kühlluft. Alternativ oder ergänzend kann das Kühlfluid zwischen Kammelementen oder Kühlrippen der Kühleinrichtung zur Fügeverbindung hin strömen. Bei dieser oder anderen Ausgestaltungen können die Kammelemente der Heizelemente an einer Trägerplatte angeordnet sein. An der Trägerplatte kann eine Kühlfluidzuführung vorgesehen sein, über die das Kühlfluid einströmt, um es dann in mehrere Kühlfluidkanäle zu verteilen. Bei verschiedenen Ausführungsformen kann vorgesehen sein, dass die Kühleinrichtung zum Umfassen oder Umgreifen des Kunststoffrohrs vier kühlbare Teile aufweist, deren Kühlelemente jeweils einen Viertelkreis des Umfangs des Kunststoffrohrs erfassen.

Vor dem thermischen Fügen des Schichtmaterials können die Heiz- und / oder die Kühleinrichtung mittels Anordnen von Adapterelementen an Grundheiz- / Grundkühlelementen an eine Bauform des Kunststoffrohres angepasst werden. Mit Hilfe der Adapterelemente können die Heiz- und / oder die Kühleinrichtung zum Beispiel an unterschiedliche Durchmesser und / oder verschiedene Querschnittsformen des Kunststoffrohrs angepasst werden. Eine dem Kunststoffrohr zugewandte Oberfläche der Adapterelemente kann das Kunststoffrohr formschlüssig aufnehmen. Die Heiz- und / oder die Kühlelemente können auch ohne die Adapterelemente zum Herstellen der Fügeverbindung nutzbar sein. Bei diesen oder anderen Ausgestaltungen können an den Heizelementen der Heizeinrichtung Heizdrähte vorgesehen sein, die in die Heizelemente eingebettet sind, beispielsweise in einer Nut an dem Heizelement verlaufen. Die Nut kann auf einer Flachseite und / oder einer dem Kunststoffrohr zugewandten Stirnseite des Heizelements ausgebildet sein, beispielsweise benachbart zur mit dem Kunststoffrohr beim Fügeprozess in Kontakt kommenden Anlagefläche des Heizelements. In den verschiedenen Ausführungsformen können die Heizelemente der Heizeinrichtung, welche beispielsweise (Kühl-)Kammelemente aufweisen, an einer Trägerplatte angeordnet sein, die über elektrische Anschlüsse verfügt, um so eine elektrische Kontaktierung der Heizdrähte zu ermöglichen.

Es kann ein Schichtmaterial aus einem faserverstärkten Kunststoffmaterial gefügt werden. In das Kunststoffmaterial können ein oder mehrere verschiedene Faserarten eingebettet sein, beispielsweise Glasfasern und / oder Kohlefasern.

Zwischen Auflageflächen des Heiz- und / oder des Kühlelements und dem Kunststoffrohr und dem Schichtmaterial kann eine thermische Energie übertragende Zwischenschicht angeordnet werden. Alternativ zum direkten Aufsetzen der Heiz- und / oder der Kühlelemente auf die Oberfläche des Kunststoffrohrs ist bei dieser Ausgestaltung vorgesehen, dass eine Zwischenschicht angeordnet ist, welche das Kunststoffrohr vollständig umgreifen kann. Die Zwischenschicht kann ein- oder mehrstückig ausgebildet sein, beispielsweise können zwei Halbschalen um das Kunststoffrohr gelegt werden, um hierauf die Fügeeinrichtung aufzusetzen, also insbesondere die Heiz- und / oder die Kühleinrichtung. In einer Ausführungsform kann vorgesehen sein, dass die Zwischenschicht eine Metallschicht ist.

Das Kunststoffrohr kann beim Fügen des Schichtmaterials beidseitig mit Druck beaufschlagt werden, also innen- und außenseitig.

Zur innenseitigen Druckbeaufschlagung kann ein expandierbarer Hohlkörper im Kunststoffrohr eingeführt und mittels Einführen eines Druckfluids in dem Hohlkörper expandiert werden. Der expandierbare Hohlkörper kann aus einem Kunststoffmaterial bestehen. Es kann sich beispielsweise um einen aufblasbaren Schlauch handeln. Der aufblasbare Schlauch kann in verschiedenen Wandabschnittsbereichen unterschiedliche Wanddicken aufweisen. Beispielsweise kann vorgesehen sein, dass der Schlauch in den beiden Stirnseitenbereichen eine höhere Wandstärke des Kunststoffmaterials als im Bereich der hierzwischen angeordneten Längsseiten aufweist. Im stirnseitigen Bereich kann ein Anschluss zum Zuführen eines Druckfluids vorgesehen sein, beispielsweise ein Ventil. Das Kunststoffmaterial des expandierbaren Hohlkörpers kann mit Fasern verstärkt sein. Im Fall des zylindrischen Schlauches können sich eingelagerte Fasern beispielsweise in axialer Richtung erstrecken. Beim Ausbilden der Fügeverbindung wird der expandierbare Hohlkörper im Inneren des Kunststoffrohrs eingebracht und dann zur innenseitigen Druckbeaufschlagung expandiert, indem das Druckfluid eingeführt wird. Die innere Druckbeaufschlagung kann nach dem Entfernen der Heizeinrichtung für den Prozess des Abkühlens in gleicher Form wie zuvor beim Herstellen der Fügeverbindung oder in geminderter Form aufrechterhalten werden. Es kann alternativ vorgesehen sein, die innere Druckbeaufschlagung während des Kühlprozesses bereits zu entfernen.

Das thermische Fügen kann mittels Aufschweißen des Schichtmaterials mit Hilfe einer Schweißeinrichtung auf dem Kunststoffrohr ausgeführt werden, wobei hierbei
- beim Herstellen einer Schweißverbindung zwischen dem Schichtmaterial und dem Kunststoffrohr das Schichtmaterial mittels der Schweißeinrichtung gegen das Kunststoffrohr gedrückt und ein Kontaktbereich zwischen dem Schichtmaterial und dem Kunststoffrohr mittels der von der Schweißeinrichtung umfassten Heizeinrichtung erhitzt wird;
- die Heizeinrichtung von dem aufgeschweißten Schichtmaterial entfernt wird;
- die Schweißverbindung unter Aufrechterhaltung einer Druckbeaufschlagung, mit der das aufgeschweißte Schichtmaterial weiter gegen das Kunststoffrohr gedrückt wird, mittels einer von der Schweißeinrichtung umfassten Kühleinrichtung gekühlt wird, wobei hierbei Kühlelemente der Kühleinrichtung und Heizelemente der Heizeinrichtung ineinander kämmen; und
- die Druckbeaufschlagung beendet und die Kühleinrichtung mit der Schweißeinrichtung von der Schweißverbindung entfernt werden.

Das thermische Fügen kann alternativ oder ergänzend mittels Heißkleben des Schichtmaterials mit Hilfe einer Heißklebeeinrichtung auf dem Kunststoffrohr ausgeführt werden, wobei hierbei
- beim Herstellen einer Klebeverbindung zwischen dem Schichtmaterial und dem Kunststoffrohr das Schichtmaterial mittels der Heißklebeinrichtung gegen das Kunststoffrohr gedrückt und ein Kontaktbereich zwischen dem Schichtmaterial und dem Kunststoffrohr mittels der von der Heißklebeinrichtung umfassten Heizeinrichtung erhitzt wird;
- die Heizeinrichtung von dem aufgeklebten Schichtmaterial entfernt wird;
- die Klebeverbindung unter Aufrechterhaltung einer Druckbeaufschlagung, mit der das aufgeklebte Schichtmaterial weiter gegen das Kunststoffrohr gedrückt wird, mittels einer von der Heißklebeinrichtung umfassten Kühleinrichtung gekühlt wird, wobei hierbei Kühlelemente der Kühleinrichtung und Heizelemente der Heizeinrichtung ineinander kämmen; und
- die Druckbeaufschlagung beendet und die Kühleinrichtung mit der Heißklebeinrichtung von der Klebeverbindung entfernt werden.

In Verbindung mit der Vorrichtung zum thermischen Fügen einer Schicht aus einem Kunststoffmaterial auf dem Kunststoffrohr gelten die vorangehend Erläuterungen zu alternativen Ausgestaltungen entsprechend.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische perspektivische Darstellung eines Kunststoffrohres mit einem hierauf angeordneten Schichtmaterial;
- Fig. 2: eine schematische perspektivische Darstellung einer Anordnung für eine Fügeeinrichtung mit einer Heizeinrichtung, einer Kühleinrichtung und einem Zwischenelement im Ausgangszustand;
- Fig. 3: eine schematische perspektivische Darstellung der Anordnung aus Fig. 2, wobei das Zwischenelement und die Heizeinrichtung in Arbeitsstellung sind;
- Fig. 4: eine schematische perspektivische Darstellung der Anordnung aus Fig. 2, wobei nun zusätzlich die Kühleinrichtung in der Arbeitsstellung ist;
- Fig. 5: eine schematische perspektivische Darstellung der Anordnung aus Fig. 2, wobei die Heizeinrichtung gelöst ist und die Kühleinrichtung noch in der Arbeitsstellung angeordnet ist;
- Fig. 6: Darstellungen von Funktionselementen der Heizeinrichtung;
- Fig. 7: Darstellungen von Funktionselementen der Kühleinrichtung und
- Fig. 8: Darstellungen von Funktionselementen der Heizeinrichtung mit eingelegten Adapterelementen.

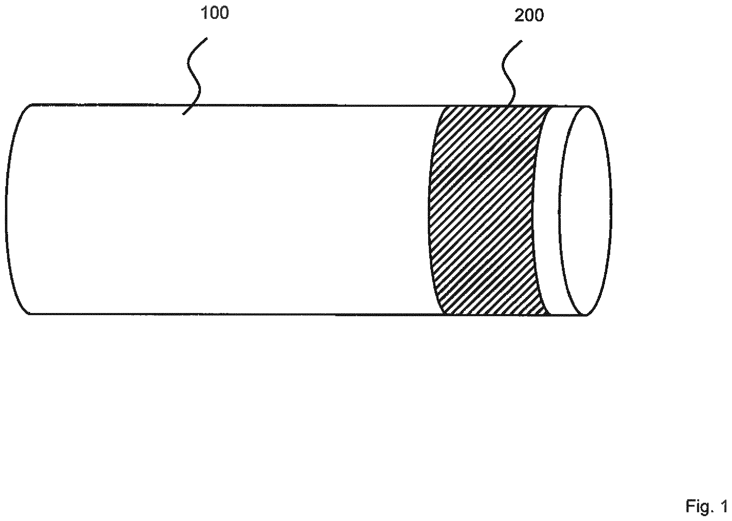

Fig. 1 zeigt eine schematische perspektivische Darstellung eines Kunststoffrohres 100 mit einem hierauf angeordneten Schichtmaterial 200, welches thermisch gefügt werden soll, insbesondere mittels Schweißen oder Heißkleben.

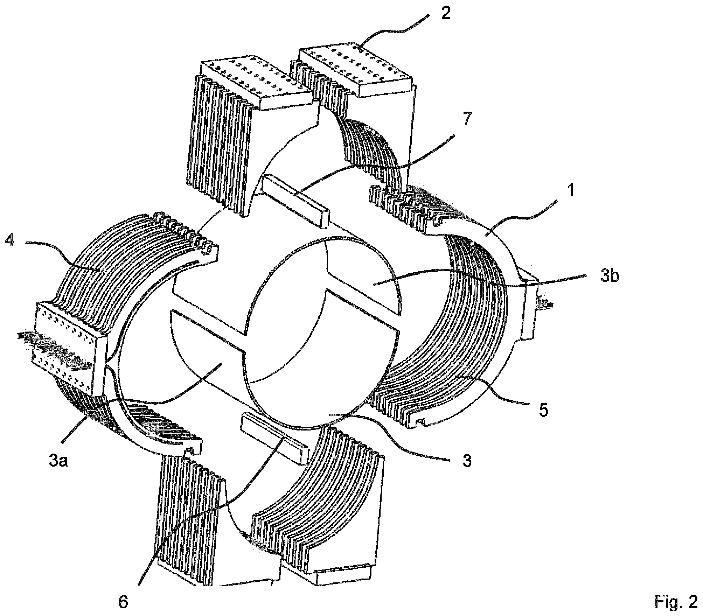

Die Fig. 2 bis 5 zeigen schematische perspektivische Darstellungen einer Anordnung mit einer Heizeinrichtung 1, einer Kühleinrichtung 2 und einem Zwischenelement 3. Die Anordnung ist in einer Fügeeinrichtung zum thermischen Fügen nutzbar, beispielsweise einer Schweißeinrichtung oder einer Heißklebeeinrichtung, die eingesetzt wird, um das Schichtmaterial 200 aus einem Kunststoffmaterial auf dem Kunststoffrohr 100 thermisch zu fügen, insbesondere außenseitig.

Bei einem solchen Fügeprozess wird das zu fügende Schichtmaterial 200 auf das Kunststoffrohr 100 aufgelegt. Die in den Fig. 2 bis 5 gezeigte Anordnung wird sodann genutzt, um das aufgelegte Schichtmaterial 200 auf das Kunststoffrohr 100 thermisch zu fügen, indem mit der Heizeinrichtung 1 ein Kontaktbereich zwischen dem Kunststoffrohr 100 und dem Schichtmaterial 200 erhitzt wird. Anschließend wird die Fügeeinrichtung mit der Kühleinrichtung 2 abgekühlt. Bei der dargestellten Ausführungsform wird das Kunststoffrohr 100 mit dem darauf angeordneten Schichtmaterial 200 beim Fügeprozess von dem Zwischenelement 3 umgriffen, so dass die Heizeinrichtung 1 und die Kühleinrichtung 2 über das Zwischenelement 3 in thermischen Kontakt mit den zu fügenden Bauteilen tritt, nämlich dem Kunststoffrohr 100 und dem zu fügenden Schichtmaterial 200, insbesondere deren Kontaktbereich. Alternativ kann vorgesehen sein, auf das Zwischenelement 3 zu verzichten. Das Zwischenelement 3 ist in der gezeigten Ausführungsform mit Halbschalen 3a, 3b gebildet, die zum Beispiel aus Metall bestehen.

Als Schichtmaterial kann auf das Kunststoffrohr 100 beispielsweise ein faserverstärktes Kunststoffmaterial gefügt werden. Als Fasern können zum Beispiel Glas- und / oder Kohlefasern in das Kunststoffmaterial eingebettet sein, insbesondere auch als Gewebe. Mit Hilfe des Fügeverfahrens können in einer Ausgestaltung Klima- oder Lüftungsrohre hergestellt werden. Mit Hilfe des thermischen Fügens des Schichtmaterials kann in einer Ausgestaltung eine endseitige Material- oder Rohrwandverstärkung an dem Kunststoffrohr hergestellt werden. Das thermischen Fügen kann zum Beispiels mittels Schweißen oder Heißkleben ausgeführt werden.

Die Fig. 2 bis 5 zeigen das Verlagern der Heizeinrichtung 1 und der Kühleinrichtung 2, die von einer Fügeeinrichtung umfasst sind, während eines Fügeprozesses. Fig. 2 zeigt eine Ausgangsstellung, in welcher sowohl das Zwischenelement 3 wie auch die Heizeinrichtung 1 und die Kühleinrichtung 2 noch entfernt von dem Kunststoffrohr und dem hierauf angeordneten Schichtmaterial angeordnet sind, wobei letztere zur Vereinfachung der Darstellung nicht gezeigt sind.

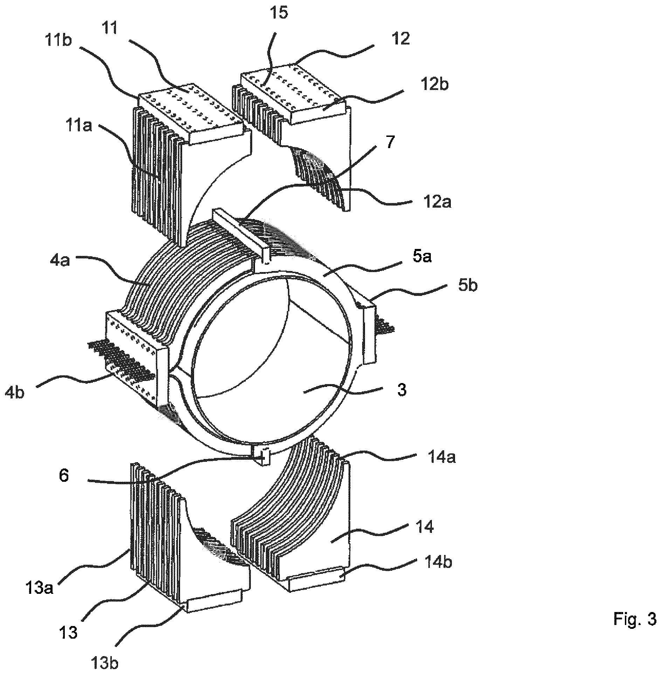

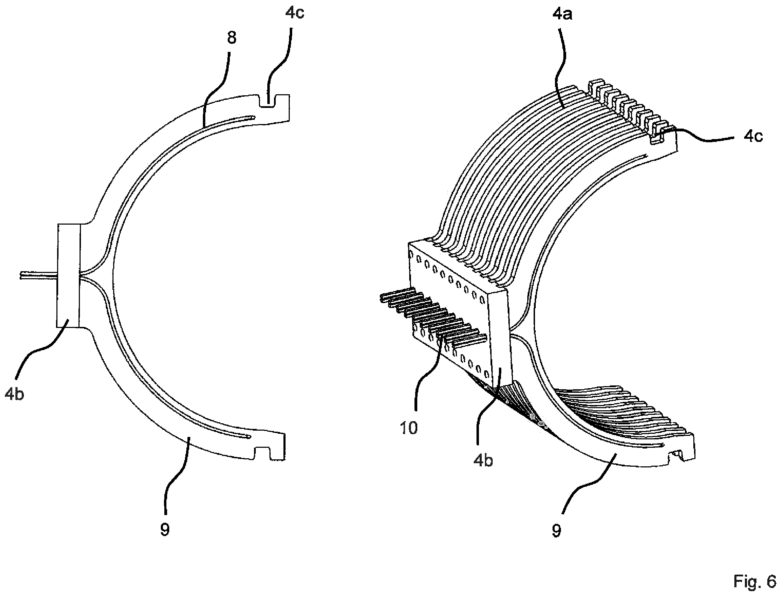

Gemäß Fig. 3 werden dann die Halbschalen 3a, 3b zusammengefügt. Hierauf werden Heizelemente 4, 5 der Heizeinrichtung 1 an dem Zwischenelement 3 außenseitig zur Auflage gebracht, wobei die Heizelemente 4, 5 mit Verriegelungselementen 6, 7 zum Eingriff kommen. Die Heizelemente 4, 5 weisen jeweils Heizkammelemente 4a, 5a auf, die an einer jeweiligen Trägerplatte 4b, 5b angeordnet sind (vgl. auch Fig. 6). Gemäß Fig. 6 erstrecken sich in den Heizlammelementen 4a, 5a Heizdrähte 8, beispielsweise in einer zugeordneten Nut auf einer Flachseite 9 der Heizkammelemente 4a, 5a. Die Heizdrähte 8 sind verbunden mit elektrischen Anschlüssen 10 an der jeweiligen Trägerplatte 4b, 5b.

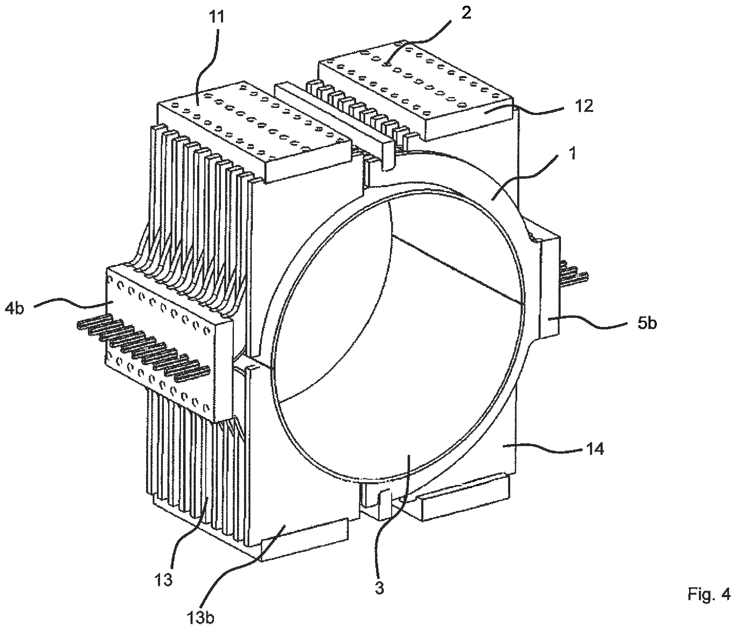

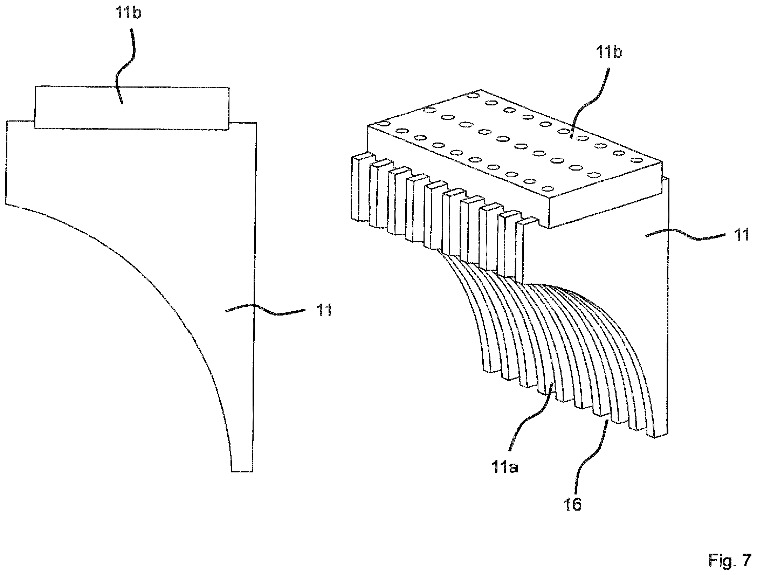

Gemäß Fig. 4 werden Kühlelemente 11, ..., 14 auf dem Zwischenelement 3 in der Nutzungs- oder Arbeitsstellung angeordnet, wobei hierbei Kühlkammelemente 11a, ..., 14a mit den Heizkammelementen 4a, 5a einkämmen. Auch die Kühlkammelemente 11a, ..., 14a sind an einer zugeordneten Trägerplatte 11b, ..., 14b aufgenommen. Die Trägerplatten 11b, ..., 14b weisen Fluidzuführöffnungen 15 auf, über die ein Kühlfluid eingebracht werden kann, beispielsweise Kühlluft, um diese in Zwischenräume 16 (vgl. Fig. 7) zwischen den Kühlkammelementen 11a, ..., 14a einströmen zu lassen. Bei der dargestellten Ausführungsform erfassen die Kühlkammelemente 11, ..., 14 jeweils einen Viertelkreis des Umfangs des zu beschichtenden Kunststoffrohrs.

Gemäß Fig. 6 weisen die Heizkammerelemente 4a eine Aufnahme 4c für die zugeordneten Verriegelungselemente 6, 7 auf.

Im Verlauf des Fügeprozesses kann der Kontaktbereich zwischen dem Kunststoffrohr 100 und dem zu fügenden Schichtmaterial 200 mit Hilfe der Heizeinrichtung 1 erhitzt werden, um so das Schichtmaterial 200 zu fügen. Das Einbringen der Wärme zum thermischen Fügen kann stattfinden, wenn die Anordnung gemäß der Fig. 3 ausgebildet ist. Alternativ oder ergänzend kann der Wärmeeintrag zum Fügen auch ausgeführt werden, wenn die Anordnung gemäß Fig. 4 gebildet ist. Beim Herstellen der Schweißverbindung wird das zu fügende Schichtmaterial 200 mit Hilfe der Heizeinrichtung 1 und / oder der Kühleinrichtung 2 gegen die Oberfläche des Kunststoffrohrs 100 gedrückt. Hierzu kann vorgesehen sein, dass gegen die jeweiligen Trägerplatten 4b, 5b; 11b, ..., 14b gedrückt wird.

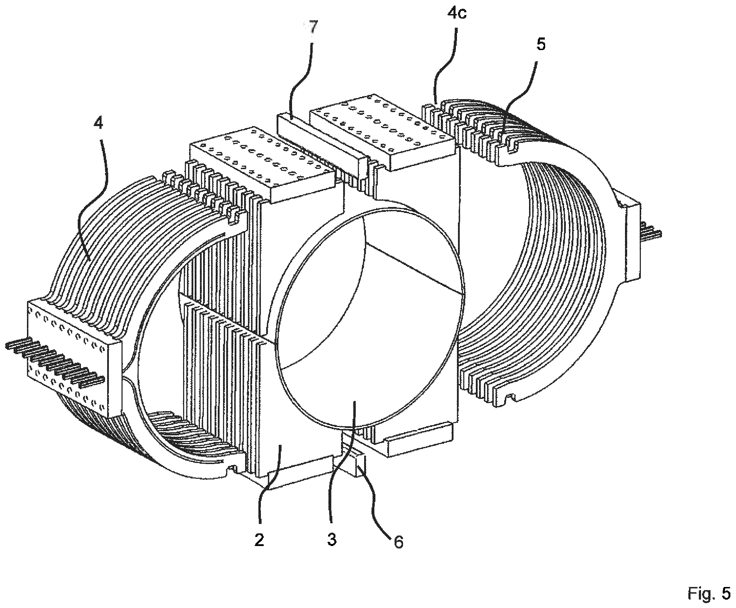

Nachdem die Fügeverbindung ausgebildet ist, werden gemäß Fig. 5 die Heizelemente 4, 5 zurückgenommen, Der Pressdruck wird weiter aufrechterhalten, wahlweise in geminderter Form, mittels der Kühleinrichtung 2. Nachdem Abkühlen der Fügeverbindung werden die Kühlelemente 11, ..., 14 sowie die Halbschalen 3a, 3b entfernt.

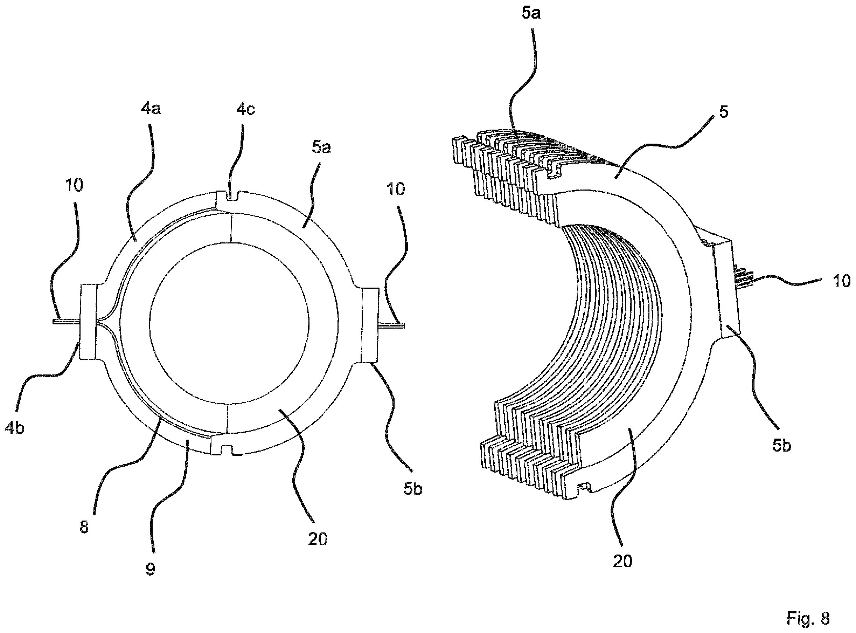

Fig. 8 zeigt Darstellungen in Verbindung mit der Heizeinrichtung 1. In die Heizkammelemente 4a, 5a sind Adapterelemente 20 formschlüssig eingelegt. Mit Hilfe der Adapterelemente 20 kann die Heizeinrichtung 1 an unterschiedliche Kunststoffrohre angepasst werden. Die Adapterelemente 20 sind lösbar an den Heizkammelementen 4a, 5a angeordnet. Eine ähnliche Anpassung mittels Adapterelementen kann in Verbindung mit der Kühleinrichtung 2 vorgesehen sein.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum thermischen Fügen einer Schicht aus einem Kunststoffmaterial auf ein Kunststoffrohr, bei dem
- ein Kunststoffrohr (100) bereitgestellt wird;
- ein Schichtmaterial (200) aus Kunststoff auf einem Oberflächenabschnitt des Kunststoffrohrs (100) angeordnet wird; und
- das Schichtmaterial (200) mittels einer Fügeeinrichtung auf dem Kunststoffrohr (100) thermisch gefügt wird, wobei beim Herstellen der Fügeverbindung zwischen dem Schichtmaterial (200) und dem Kunststoffrohr (100) das Schichtmaterial (200) mittels der Fügeeinrichtung gegen das Kunststoffrohr (100) gedrückt und ein Kontaktbereich zwischen dem Schichtmaterial (200) und dem Kunststoffrohr (100) mittels einer von der Fügeeinrichtung umfassten Heizeinrichtung (1) erhitzt wird;
- die Heizeinrichtung (1) von dem gefügten Schichtmaterial (200) entfernt wird;
**dadurch gekennzeichnet, dass**
- die Fügeverbindung unter Aufrechterhaltung einer Druckbeaufschlagung, mit der das gefügte Schichtmaterial (200) weiter gegen das Kunststoffrohr (100) gedrückt wird, mittels einer von der Fügeeinrichtung umfassten Kühleinrichtung (2) gekühlt wird, wobei hierbei Kühlelemente (11a, ..., 14a) der Kühleinrichtung (2) und Heizelemente (4a; 5a) der Heizeinrichtung (1) ineinander kämmen; und
- die Druckbeaufschlagung beendet und die Kühleinrichtung (2) mit der Fügeeinrichtung von der Fügeverbindung entfernt werden.

2. Verfahren nach Anspruch 1, **dadurch gekennzeichnet, dass** das Schichtmaterial (200) beim Herstellen der Fügeverbindung mittels der Heiz- und / oder der Kühleinrichtung (1, 2) gegen das Kunststoffrohr (100) gedrückt wird.

3. Verfahren nach Anspruch 1 oder 2, **dadurch gekennzeichnet, dass** die Heiz- und / oder die Kühleinrichtung (1, 2) das Kunststoffrohr (100) im Wesentlichen vollständig umgreifen, wenn die Heizeinrichtung / die Kühleinrichtung (1, 2) auf dem Kunststoffrohr (100) angeordnet sind.

4. Verfahren nach mindestens einem der vorangehenden Ansprüche, **dadurch gekennzeichnet, dass** nach dem Entfernen der Heizeinrichtung (1) beim Kühlen der Fügeverbindung mittels der Kühleinrichtung (2) höchstens der beim Herstellen der Fügeverbindung beaufschlagte Druck aufrechterhalten wird.

5. Verfahren nach mindestens einem der vorangehenden Ansprüche, **dadurch gekennzeichnet, dass** beim Kühlen der Fügeverbindung ein Kühlfluid über Fluidkanäle der Kühleinrichtung (2) zur Fügeverbindung hin zugeführt wird.

6. Verfahren nach mindestens einem der vorangehenden Ansprüche, **dadurch gekennzeichnet, dass** vor dem Fügen des Schichtmaterials (200) die Heiz- und / oder die Kühleinrichtung (1, 2) mittels Anordnen von Adapterelementen (20) an Grundheiz- / Grundkühlelementen an eine Bauform des Kunststoffrohres (100) angepasst werden.

7. Verfahren nach mindestens einem der vorangehenden Ansprüche, **dadurch gekennzeichnet, dass** ein Schichtmaterial (200) aus einem faserverstärkten Kunststoffmaterial thermisch gefügt wird.

8. Verfahren nach mindestens einem der vorangehenden Ansprüche, **dadurch gekennzeichnet, dass** zwischen Auflageflächen des Heiz- und / oder des Kühlelements (4, 5; 11, ..., 14) und dem Kunststoffrohr (100) und dem Schichtmaterial (200) eine thermische Energie übertragende Zwischenschicht (3) angeordnet wird.

9. Verfahren nach mindestens einem der vorangehenden Ansprüche, **dadurch gekennzeichnet, dass** das Kunststoffrohr (100) beim Fügen des Schichtmaterials (200) beidseitig mit Druck beaufschlagt wird, also innen- und außenseitig.

10. Verfahren nach Anspruch 9, **dadurch gekennzeichnet, dass** zur innenseitigen Druckbeaufschlagung ein expandierbarer Hohlkörper im Kunststoffrohr (100) eingeführt und mittels Einführen eines Druckfluids in dem Hohlkörper expandiert wird.

11. Verfahren nach mindestens einem der vorangehenden Ansprüche, **dadurch gekennzeichnet, dass** das thermische Fügen mittels Aufschweißen des Schichtmaterials (200) mit Hilfe einer Schweißeinrichtung auf dem Kunststoffrohr (100) ausgeführt wird, wobei
- beim Herstellen einer Schweißverbindung zwischen dem Schichtmaterial (200) und dem Kunststoffrohr (100) das Schichtmaterial (200) mittels der Schweißeinrichtung gegen das Kunststoffrohr (100) gedrückt und ein Kontaktbereich zwischen dem Schichtmaterial (200) und dem Kunststoffrohr (100) mittels der von der Schweißeinrichtung umfassten Heizeinrichtung (1) erhitzt wird;
- die Heizeinrichtung (1) von dem aufgeschweißten Schichtmaterial (200) entfernt wird;
- die Schweißverbindung unter Aufrechterhaltung einer Druckbeaufschlagung, mit der das aufgeschweißte Schichtmaterial (200) weiter gegen das Kunststoffrohr (100) gedrückt wird, mittels einer von der Schweißeinrichtung umfassten Kühleinrichtung (2) gekühlt wird, wobei hierbei Kühlelemente (11a, ..., 14a) der Kühleinrichtung (2) und Heizelemente (4a; 5a) der Heizeinrichtung (1) ineinander kämmen; und
- die Druckbeaufschlagung beendet und die Kühleinrichtung (2) mit der Schweißeinrichtung von der Schweißverbindung entfernt werden.

12. Verfahren nach mindestens einem der Ansprüche 1 bis 10, **dadurch gekennzeichnet, dass** das thermische Fügen mittels Heißkleben des Schichtmaterials (200) mit Hilfe einer Heißklebeeinrichtung auf dem Kunststoffrohr (100) ausgeführt wird, wobei
- beim Herstellen einer Klebeverbindung zwischen dem Schichtmaterial (200) und dem Kunststoffrohr (100) das Schichtmaterial (200) mittels der Heißklebeinrichtung gegen das Kunststoffrohr (100) gedrückt und ein Kontaktbereich zwischen dem Schichtmaterial (200) und dem Kunststoffrohr (100) mittels der von der Heißklebeinrichtung umfassten Heizeinrichtung (1) erhitzt wird;
- die Heizeinrichtung (1) von dem aufgeklebten Schichtmaterial (200) entfernt wird;
- die Klebeverbindung unter Aufrechterhaltung einer Druckbeaufschlagung, mit der das aufgeklebte Schichtmaterial (200) weiter gegen das Kunststoffrohr (100) gedrückt wird, mittels einer von der Heißklebeinrichtung umfassten Kühleinrichtung (2) gekühlt wird, wobei hierbei Kühlelemente (11a, ..., 14a) der Kühleinrichtung (2) und Heizelemente (4a; 5a) der Heizeinrichtung (1) ineinander kämmen; und
- die Druckbeaufschlagung beendet und die Kühleinrichtung (2) mit der Heißklebeinrichtung von der Klebeverbindung entfernt werden.

13. Vorrichtung zum thermischen Fügen einer Schicht aus einem Kunststoffmaterial auf ein Kunststoffrohr mittels eines Verfahrens nach einem der vorangehenden Ansprüche, mit
- einer Aufnahmeeinrichtung zum Aufnehmen eines Kunststoffrohrs (100) für einen thermischen Fügeprozess; und
- einer Fügeeinrichtung, die eine Heizeinrichtung (1) mit Heizelementen (4a; 5a) aufweist und die eingerichtet ist, bei dem Fügeprozess ein Schichtmaterial (200) aus Kunststoff auf einem Oberflächenabschnitt des Kunststoffrohrs (100) zu fügen;
**dadurch gekennzeichnet, dass** die Fügeeinrichtung eine Kühleinrichtung (2) mit Kühlelementen (11a, ..., 14a) aufweist, wobei die Kühlelemente (11a, ..., 14a) und die Heizelemente (4a; 5a) ineinander kämmend anordenbar sind.

## Claims

1. A method for the thermal joining of a layer of a plastic material to a plastic pipe, in which
- a plastic pipe (100) is provided;
- a layer material (200) of plastic is arranged onto a surface section of the plastic pipe (100); and
- the layer material (200) is thermally joined to the plastic pipe (100) by means of a joining device, wherein during the production of the joint between the layer material (200) and the plastic pipe (100), the layer material (200) is pressed against the plastic pipe (100) by means of the joining device, and a contact region between the layer material (200) and the plastic pipe (100) is heated by means of a heating device (1) surrounded by the joining device;
- the heating device (1) is removed from the joined layer material (200);
**characterised in that**,
- the joint is cooled by means of a cooling device (2) surrounded by the joining device whilst maintaining an applied pressure with which the joined layer material (200) continues to be pressed against the plastic pipe (100), wherein hereby cooling elements (11a, ..., 14a) of the cooling device (2) and heating elements (4a; 5a) of the heating device (1) intermesh with one another; and
- the application of pressure is terminated, and the cooling device (2) with the joining device is removed from the joint.

2. The method according to claim 1, **characterised in that**, during the production of the joint, the layer material (200) is pressed against the plastic pipe (100) by means of the heating and/or the cooling device (1, 2).

3. The method according to claim 1 or 2, **characterised in that** the heating and/or the cooling device (1, 2) substantially completely encompass the plastic pipe (100), when the heating device/the cooling device (1, 2) are arranged on the plastic pipe (100).

4. The method according to at least one of the preceding claims, **characterised in that** after the heating device (1) has been removed, during the cooling of the joint by means of the cooling device (2), the pressure maintained is at most that which is applied during the production of the joint.

5. The method according to at least one of the preceding claims, **characterised in that**, during the cooling of the joint, a cooling fluid is supplied to the joint via fluid channels of the cooling device (2).

6. The method according to at least one of the preceding claims, **characterised in that**, before the joining of the layer material (200), the heating and/or the cooling device (1, 2) are adapted to the structural shape of the plastic pipe (100) by means of arranging adapter elements (20) on basic heating/cooling elements.

7. The method according to at least one of the preceding claims, **characterised in that**, a layer material (200) of a fibre-reinforced plastic material is thermally joined.

8. The method according to at least one of the preceding claims, **characterised in that**, an intermediate layer (3) transferring thermal energy is arranged between bearing surfaces of the heating and/or cooling element (4, 5; 11, ..., 14) and the plastic pipe (100) and the layer material (200).

9. The method according to at least one of the preceding claims, **characterised in that**, during the joining of the layer material (200) pressure is applied to the plastic pipe (100) on both faces, that is to say, on the inner face and the outer face.

10. The method according to claim 9, **characterised in that**, for the application of pressure to the inner face an expandable hollow body is introduced into the plastic pipe (100) and expanded by introducing a pressurised fluid into the hollow body.

11. The method according to at least one of the preceding claims, **characterised in that**, the thermal joining is carried out by welding the layer material (200) onto the plastic pipe (100) with the aid of a welding device, wherein
- during the production of a welded joint between the layer material (200) and the plastic pipe (100), the layer material (200) is pressed against the plastic pipe (100) by means of the welding device, and a contact region between the layer material (200) and the plastic pipe (100) is heated by means of the heating device (1) surrounded by the welding device;
- the heating device (1) is removed from the welded-on layer material (200);
- the welded joint is cooled by means of a cooling device (2), which is surrounded by the welding device, whilst maintaining a pressure with which the welded-on layer material (200) continues to be pressed against the plastic pipe (100), wherein hereby cooling elements (11a, ..., 14a) of the cooling device (2) and heating elements (4a; 5a) of the heating device (1) intermesh with one another; and
- the application of pressure is terminated and the cooling device (2) with the welding device is removed from the welded joint.

12. The method according to at least one of the claims 1 to 10, **characterised in that**, the thermal joining is carried out by means of thermal bonding of the layer material (200) with the aid of a thermal bonding device on the plastic pipe (100), wherein
- during the production of an adhesive bond between the layer material (200) and the plastic pipe (100), the layer material (200) is pressed against the plastic pipe (100) by means of the thermal bonding device, and a contact region between the layer material (200) and the plastic pipe (100) is heated by means of the heating device (1) surrounded by the thermal bonding device;
- the heating device (1) is removed from the bonded layer material (200);
- the adhesive bond is cooled by means of a cooling device (2) surrounded by the thermal bonding device whilst maintaining a pressure with which the bonded layer material (200) continues to be pressed against the plastic pipe (100), wherein hereby cooling elements (11a, ..., 14a) of the cooling device (2) and heating elements (4a; 5a) of the heating device (1) intermesh with one another; and
- the application of pressure is terminated and the cooling device (2) with the thermal bonding device is removed from the bonded joint.

13. Device for the thermally joining of a layer of a plastic material to a plastic pipe by means of a method according to one of the preceding claims, with
- a mounting device for the mounting of a plastic pipe (100) for a thermal joining process; and
- a joining device, which has a heating device (1) with heating elements (4a; 5a) and which is equipped to join a layer material (200) of plastic onto a surface section of the plastic pipe (100) in the joining process;
**characterised in that**, the joining device has a cooling device (2) with cooling elements (11a, ..., 14a), wherein the cooling elements (11a, ... , 14a) and the heating elements (4a; 5a) can be arranged in an intermeshing manner.

## Revendications

1. Procédé pour le jointage thermique d'une couche d'un matériau plastique sur un tube en plastique, dans lequel
- un tube en plastique (100) est fourni ;
- un matériau en couche (200) en plastique est disposé sur un tronçon de surface du tube en plastique (100) ; et
- le matériau en couche (200) est joint thermiquement sur le tube en plastique (100) au moyen d'un dispositif de jointage, dans lequel lors de la formation de la liaison par joint entre le matériau en couche (200) et le tube en plastique (100), le matériau en couche (200) est appuyé contre le tube en plastique (100) au moyen du dispositif de jointage et une zone de contact entre le matériau en couche (200) et le tube en plastique (100) est chauffée au moyen d'un dispositif de chauffage (1) compris par le dispositif de jointage,
- le dispositif de chauffage (1) est enlevé du matériau en couche (200) joint ;
**caractérisé en ce que**
- la liaison par joint, par maintien d'un apport de pression avec lequel le matériau en couche (200) joint continue d'être appuyé contre le tube en plastique (100), est refroidie au moyen d'un dispositif de refroidissement (2) compris par le dispositif de jointage, dans lequel des éléments de refroidissement (11a, ..., 14a) du dispositif de refroidissement (2) et des éléments de chauffage (4a; 5a) du dispositif de chauffage (1) s'engrènent pour cela les uns dans les autres ; et
- l'apport de pression est terminé et le dispositif de refroidissement (2) avec le dispositif de jointage est retiré de la liaison par joint.

2. Procédé selon la revendication 1, **caractérisé en ce que** le matériau en couche (200), lors de la formation de la liaison par joint, est appuyé contre le tube en plastique (100) au moyen du dispositif de chauffage et/ou de refroidissement (1,2).

3. Procédé selon la revendication 1 ou 2, **caractérisé en ce que** le dispositif de chauffage et/ou le dispositif de refroidissement (1, 2) entoure(nt) essentiellement complètement le tube en plastique (100), lorsque le dispositif de chauffage/le dispositif de refroidissement (1, 2) est/sont disposé(s) sur le tube en plastique (100).

4. Procédé selon au moins une des revendications précédentes, **caractérisé en ce qu'**au plus la pression apportée lors de la formation de la liaison par joint est maintenue après l'enlèvement du dispositif de chauffage (1), lors du refroidissement de la liaison par joint au moyen du dispositif de refroidissement (2).

5. Procédé selon au moins une des revendications précédentes, **caractérisé en ce que** lors du refroidissement de la liaison par joint, un fluide de refroidissement est alimenté vers la liaison par joint par des canaux de fluide du dispositif de refroidissement (2).

6. Procédé selon au moins une des revendications précédentes, **caractérisé en ce qu'**avant le jointage du matériau en couche (200), le dispositif de chauffage et/ou le dispositif de refroidissement (1, 2) est/sont adapté(s) à une forme de construction du tube en plastique (100) par l'agencement d'éléments adaptateurs (20) sur des éléments de chauffage de base/de refroidissement de base.

7. Procédé selon au moins une des revendications précédentes, **caractérisé en ce qu'**un matériau en couche (200) en matériau plastique renforcé par fibres est joint thermiquement.

8. Procédé selon au moins une des revendications précédentes, **caractérisé en ce qu'**une couche intermédiaire (3) transmettant de l'énergie thermique est disposée entre des surfaces d'appui de l'élément de chauffage et/ou de refroidissement (4, 5 ; 11,...14) et le tube en plastique (100) et le matériau en couche (200).

9. Procédé selon au moins une des revendications précédentes, **caractérisé en ce que** le tube en plastique (100) est alimenté en pression des deux côtés, c'est à dire à l'intérieur et à l'extérieur, lors du jointage du matériau en couche (200).

10. Procédé selon la revendication 9, **caractérisé en ce que** pour l'alimentation en pression à l'intérieur, un corps creux expansible est introduit dans le tube en plastique (100) et expansé au moyen de l'introduction d'un fluide sous pression dans le corps creux.

11. Procédé selon au moins une des revendications précédentes, **caractérisé en ce que** le jointage thermique est réalisé par soudage du matériau en couche (200) à l'aide d'un dispositif de soudure sur le tube en plastique (100), dans lequel
- lors de la formation d'une liaison soudée entre le matériau en couche (200) et le tube en plastique (100), le matériau en couche (200) est appuyé contre le tube en plastique (100) au moyen du dispositif de soudure, et une zone de contact entre le matériau en couche (200) et le tube en plastique (100) est chauffée au moyen du dispositif de chauffage (1) compris par le dispositif de soudure ;
- le dispositif de chauffage (1) est enlevé du matériau en couche (200) soudé ;
- la liaison par soudage, par maintien d'un apport de pression avec lequel le matériau en couche (200) soudé continue d'être appuyé contre le tube en plastique (100), est refroidie au moyen d'un dispositif de refroidissement (2) compris par le dispositif de soudage, dans lequel des éléments de refroidissement (11a, ..., 14a) du dispositif de refroidissement (2) et des éléments de chauffage (4a ; 5a) du dispositif de chauffage (1) s'engrènent pour cela les uns dans les autres ; et
- l'apport de pression est terminé et le dispositif de refroidissement (2) avec le dispositif de jointage est retiré de la liaison par joint.

12. Procédé selon au moins une des revendications 1 à 10, **caractérisé en ce que** le jointage thermique est réalisé par collage à chaud du matériau en couche (200) à l'aide d'un dispositif de collage à chaud sur le tube en plastique (100), dans lequel
- lors de la formation d'une liaison par collage entre le matériau en couche (200) et le tube en plastique (100), le matériau en couche (200) est appuyé contre le tube en plastique (100) au moyen du dispositif de collage à chaud et une zone de contact entre le matériau en couche (200) et le tube en plastique (100) est chauffée au moyen du dispositif de chauffage (1) compris par le dispositif de collage à chaud ;
- le dispositif de chauffage (1) est enlevé du matériau en couche (200) collé ;
- la liaison par collage, par maintien d'un apport de pression avec lequel le matériau en couche (200) collé continue d'être appuyé contre le tube en plastique (100), est refroidie au moyen d'un dispositif de refroidissement (2) compris par le dispositif de collage à chaud, dans lequel des éléments de refroidissement (11a, ..., 14a) du dispositif de refroidissement (2) et des éléments de chauffage (4a ; 5a) du dispositif de chauffage (1) s'engrènent pour cela les uns dans les autres ; et
- l'apport de pression est terminé et le dispositif de refroidissement (2) avec le dispositif de collage à chaud est retiré de la liaison par collage.

13. Dispositif pour le jointage thermique d'une couche d'un matériau plastique sur un tube en plastique au moyen d'un procédé selon l'une des revendications précédentes, comprenant :
- un dispositif de réception pour recevoir un tube en plastique (100) pour un processus de jointage thermique ; et
- un dispositif de jointage qui présente un dispositif de chauffage (1) avec des éléments de chauffage (4a ; 5a) et qui est conçu pour joindre un matériau en couche (200) en plastique sur un tronçon de surface du tube en plastique (100) lors du processus de jointage ;
**caractérisé en ce que** le dispositif de jointage présente un dispositif de refroidissement (2) avec des éléments de refroidissement (11a, ..., 14a), dans lequel les éléments de refroidissement (11a, ..., 14a) et les éléments de chauffage (4a ; 5a) peuvent être disposés en s'engrenant les uns dans les autres.
